# EUROPÄISCHE PATENTANMELDUNG

(11) **EP 3 355 558 A1**
(43) Veröffentlichungstag der Anmeldung: **01.08.2018**
(21) Anmeldenummer: 17000151.5
(22) Anmeldetag: 31.01.2017
(51) Int. Cl.: H04M 1/725, H02J 7/00, H02J 7/02, G08B 5/22, G08B 3/10, H04W 64/00, H04W 88/02

(54) **LADEGERÄT, VERWENDUNG UND VERFAHREN ZUM NUTZEN EINES TRAGBAREN LADEGERÄTS, SYSTEM UND KOORDINIERUNGSVERFAHREN ZUR KOORDINIERUNG DER ARBEIT VON EINER ANZAHL VON MITARBEITERN**

(71) Anmelder: Noll, Oliver, 56113 Bonn (DE)
(72) Erfinder: Noll, Oliver, 56113 Bonn (DE)
(74) Vertreter: Preusche, Rainer

(57) **Zusammenfassung**

Die Erfindung betrifft ein Ladegerät (100) mit zumindest einem Energiespeicher (110). Das Ladegerät (100) kann eine Datenschnittstelle (130) zum Austausch von Daten mit dem Mediengerät (K) und/oder einem mit der Datenschnittstelle (130) kommunikativ verbundenen weiteren Mediengerät (K) und/oder weiteren Ladegerät (100); eine Medienschnittstelle (140) zum Austausch von Daten mit einem mit der Medienschnittstelle (140) kommunikativ verbundenen Ein-Ausgabegerät (A) und/oder eine Recheneinheit (170) zur Konvertierung von Daten unterschiedlicher Datenformate umfassen, und/oder eine Masse von unter 95 g und/oder eine maximale Ausdehnung von unter 10 cm aufweisen.

Die Erfindung betrifft außerdem eine Verwendung eines Ladegeräts (100) zur Datenübertragung und/oder Datenkonvertierung zwischen zumindest einem Mediengerät (K) und einem Ein-Ausgabegerät (A).

Die Erfindung betrifft ferner ein Verfahren (200) zum Nutzen eines tragbaren Ladegeräts (100) zur Erhöhung der Nutzungsdauer eines batteriebetriebenen Mediengerätes (K) mit folgenden Schritten: Kommunikatives Verbinden (220) einer Datenschnittstelle (130) des Ladegeräts (100) mit einer Anzahl von Mediengeräten (K); Empfangen (230) von Datensignalen von einem der Mediengeräte (K); Konvertieren (235) der empfangenen Daten in ein für die Wiedergabe durch ein mit einer Medienschnittstelle (140) des Ladegerätes (100) kommunikativ verbundenes Ein-Ausgabegerät (A) geeignetes Datenformat und Übertragen (240) der konvertierten Daten an das Ein-Ausgabegerät (A).

## Beschreibung

Die Erfindung betrifft ein Ladegerät mit zumindest einem Energiespeicher und ein Verfahren zur Nutzung eines tragbaren Ladegerätes zur Erhöhung der Nutzungsdauer eines batteriebetriebenen Mediengerätes.

Die Erfindung betrifft außerdem eine Verwendung eines tragbaren Ladegeräts zur Datenübertragung und/oder Datenkonvertierung zwischen zumindest einem Mediengerät und einem Ein-Ausgabegerät.

Die Erfindung betrifft außerdem ein System und ein Koordinierungsverfahren zur Koordinierung der Arbeit von einer Anzahl von Mitarbeitern durch eine Mitarbeiterleitstelle.

Im Alltag benutzen die meisten Menschen eine Vielzahl unterschiedlicher Mediengeräte, wie beispielsweise Fernseher, Desktop-, Laptop- und Tablet-Computer, Smartphones, Handys, Telefone, Video- und Audioplayer und Mischformen daraus.

Zu den Mediengeräten gibt es eine Vielzahl von Peripheriegeräten, zum Beispiel Ein- und Ausgabegeräte wie Fernbedienungen, Mikrofone und Kopfhörer oder Ladegeräte, die häufig nur zu jeweils einer begrenzten Anzahl von Mediengeräten kompatibel sind. Dadurch muss ein Nutzer mehrerer Mediengeräte eine Vielzahl von unterschiedlichen Peripheriegeräten vorhalten, was teuer, unübersichtlich und unpraktisch ist. Bei einer mobilen Nutzung der Me-diengeräte kommt der Nachteil hinzu, dass alle notwendigen Peripheriegeräte transportiert werden müssen, was schwer und platzraubend ist.

Im Bereich von Ladegeräten gibt es Bestrebungen, diese durch einheitliche Standards mit Mediengeräten unterschiedlicher Hersteller kompatibel zu gestalten, beispielsweise über Micro-USB-Stecker oder induktive Energieübertragung gemäß dem Qi-Standard. Bisher zielen diese Bestrebungen aber nur auf Smartphones ab. Verschiedenartige Mediengeräte sind in der Regel weiterhin auf unterschiedliche Ladegeräte angewiesen.

Daraus ergibt sich die technische Aufgabe eine Vorrichtung und ein Verfahren zu schaffen, um die, insbesondere mobile, Nutzung einer Vielzahl von Mediengeräten einfacher, praktischer und kostengünstiger als mit bekannten Peripheriegeräten zu gestalten.

Diese Aufgabe wird durch ein Ladegerät nach Anspruch 1 und ein Verfahren zum Nutzen eines tragbaren Ladegeräts nach Anspruch 8 gelöst.

Vorteilhafte Ausführungen ergeben sich aus den Unteransprüchen.

Ein erfindungsgemäßes Ladegerät ist zur Erhöhung der Nutzungsdauer eines batteriebetriebenen Mediengerätes ausgelegt. Unter einem "batteriebetriebenen Mediengerät" wird ein Mediengerät verstanden, dass die Energie für seinen Betrieb aus einem zu dem Mediengerät gehörigen Energiespeicher bezieht. Bei dem Energiespeicher kann es sich neben einer Batterie beispielsweise auch um einen Akkumulator handeln. Die "Nutzungsdauer" im Sinne der vorliegenden Anmeldung ist die Dauer, während der das Mediengerät genutzt werden kann, ohne den Energiespeicher auszutauschen oder an einer anderen externen Energiequelle als dem erfindungsgemäßen Ladegerät aufzuladen.

Das Ladegerät umfasst zumindest einen Energiespeicher. Durch einen Energiespeicher kann das Ladegerät vorteilhafterweise ohne externe Energiequelle zum Aufladen eines Mediengerätes oder zur Speisung anderer Funktionen eines erfindungsgemäßen Ladegeräts benutzt werden. Insbesondere kann das Ladegerät als Notfall-Energiequelle genutzt werden, beispielsweise wenn mit einem entladenen Handy ein dringender Anruf getätigt werden soll.

Das Ladegerät kann zumindest eine Datenschnittstelle zum, insbesondere bidirektionalen, Austausch von Daten mit dem Mediengerät und/oder zumindest einem mit der Datenschnittstelle kommunikativ verbundenen weiteren Mediengerät und/oder weiteren Ladegerät; zumindest eine Medienschnittstelle zum, insbesondere bidirektionalen, Austausch von Daten mit einem mit der Medienschnittstelle kommunikativ verbundenen Ein-Ausgabegerät und/oder zumindest eine Recheneinheit zur Konvertierung von Daten unterschiedlicher Datenformate umfassen.

Die von der Datenschnittstelle, insbesondere bidirektional, übertragenen Daten können Steuerbefehle zur Steuerung des Mediengerätes und/oder, insbesondere digitale, Mediendaten, insbesondere Audio- und/oder Videodaten einer von dem Mediengerät abgespielten und/oder übertragenen Mediendatei oder einer über das Mediengerät geführten Audiound/oder Videounterhaltung, beispielsweise eines Telefonats, umfassen.

Ein Ein-Ausgabegerät im Sinne der Erfindung kann ein Video- und/oder Audioeingabegerät und/oder -ausgabegerät, wie beispielsweise ein Bildschirm, eine Datenbrille, eine Kamera, ein Kopfhörer, ein Mikrofon oder eine Kombination daraus, insbesondere in Form eines Headsets, sein. Das Ein-Ausgabegerät kann zum drahtlosen und/oder kabelgebundenen Empfangen und/oder senden von Daten ausgelegt sein. Die von der Medienschnittstelle, insbesondere bidirektional, übertragenen Daten können von dem Ein-Ausgabegerät aufgenommene und/oder wiedergegebene, insbesondere analoge, Audio- und/oder Videosignale umfassen.

Die Recheneinheit kann beispielsweise einen Digital-Analog-Wandler, einen Analog-Digital-Wandler, einen Prozessor, eine Leiterplatte und/oder einen Einplatinencomputer umfassen. Die Recheneinheit kann dazu ausgelegt sein, Daten zwischen unterschiedlichen Datenformaten zu konvertieren, insbesondere im Sinne einer Analog-Digital-Wandlung und/oder Digital-Analog-Wandlung von Daten. Darüber hinaus kann die Recheneinheit dazu ausgelegt sein, Daten mehrerer Datenschnittstellen und/oder Mediengeräte zu gemeinsamen Daten zur Weiterleitung an die Ein-Ausgabeschnittsteile zusammenzuführen, beispielsweise um gleichzeitig eine Audiodatei oder Videodatei von einem ersten Mediengerät wiederzugeben und ein Telefonat über ein zweites Mediengerät zu führen.

Die Recheneinheit kann einen Datenspeicher umfassen, der insbesondere als Zwischenspeicher zur Aufnahme empfangener Daten bis zu deren Weiterleitung an die Medienschnittstelle ausgelegt sein kann. Dadurch kann auch bei einer vorübergehenden Beeinträchtigung oder Trennung der kommunikativen Verbindung mit dem Mediengerät die Wiedergabe über die Medienschnittstelleunterbrechungsfrei fortgesetzt werden. In dem Datenspeicher können auch Mediendateien dauerhaft zur Wiedergabe ohne verbundenes Mediengerät gespeichert sein.

Der Vorteil einer erfindungsgemäßen Ausstattung eines Ladegeräts mit einer Datenschnittstelle, einer Medienschnittstelle und einer Recheneinheit liegt darin, dass zu einem Mediengerät, beispielsweise bezüglich der verwendeten Datenformate und/oder Schnittstellen, inkompatible Ein-Ausgabegeräte mit diesem Mediengerät kommunikativ verbunden werden können. Dadurch benötigt ein Nutzer weniger unterschiedliche Peripheriegeräte zur Nutzung mehrerer Mediengeräte, was die Nutzung einfacher, praktischer und kostengünstiger macht. Insbesondere wenn der Nutzer ein hochwertiges und entsprechend teures Ein-Ausgabegerät, beispielsweise einen HiFi-Kopfhörer, erworben hat, kann er dieses vorteilhafterweise auch bei einem Wechsel des Mediengerätes weiterverwenden.

Beispielsweise können mit dem erfindungsgemäßen Ladegerät kabelgebundene Kopfhörer mit einem Smartphone, das über keine Kopfhörerbuchse verfügt, über eine Bluetooth-Schnittstelle des Smartphones verbunden werden. In diesem Beispiel könnte der Nutzer zwar auch Bluetooth-Kopfhörer verwenden, diese sind aber in der Regel schwerer, unhandlicher und/oder teurer als kabelgebundene Kopfhörer und bieten häufig keine ausreichende Klangqualität und/oder Batterielebensdauer.

Weiterhin kann die Übertragung von Daten über das Ladegerät an das Ein-Ausgabegerät auf für das Mediengerät energiesparendere Weise erfolgen, als dies bei einer direkten Übertragung an das Ein-Ausgabegerät möglich wäre. Beispielsweise kann bei einem Ein-Ausgabegerät, das nur eine energieintensive, insbesondere drahtlose, Datenübertragung, beispielsweise Bluetooth, beherrscht, zwischen dem Mediengerät und dem Ladegerät eine energiesparende, insbesondere kabelgebundene, Datenübertragung stattfinden. Dadurch wird seitens des Mediengerätes Energie eingespart, wodurch sich dessen Nutzungsdauer erhöht.

Wird das Ladegerät über seine Datenschnittstelle kommunikativ mit einem weiteren Ladegerät verbunden, können Daten von dem Mediengerät über das Ladegerät an das weitere Ladegerät und umgekehrt übertragen werden. Das ist von Vorteil, wenn eine direkte Datenübertragung zwischen dem Mediengerät und dem weiteren Ladegerät, beispielsweise aufgrund einer zu hohen Entfernung nicht möglich ist.

Das Ladegerät kann eine Masse von unter 95 g, beispielsweise unter 70 g, insbesondere unter 40 g aufweisen. Das Ladegerät kann eine maximale Ausdehnung von unter 10 cm, beispielsweise unter 8 cm, insbesondere etwa 5 cm aufweisen. Durch eine entsprechend kleine Masse und/oder maximale Ausdehnung ist das Ladegerät so klein und/oder leicht, dass es von einem Nutzer, beispielsweise in einer Kleidungstasche oder an einem Armband, getragen werden kann, ohne den Nutzer in seiner Bewegungsfreiheit einzuschränken. Ein Ladegerät, das ohne Einschränkung der Bewegungsfreiheit des Nutzers von diesem getragen werden kann ist "tragbar" im Sinne der vorliegenden Anmeldung. Masse und/oder maximale Ausdehnung des Ladegeräts können insbesondere kleiner als bei üblichen Smartphones sein. Die minimale Ausdehnung des Ladegeräts kann vorteilhafterweise weniger als 2 cm, insbesondere etwa 1 cm betragen.

Das Ladegerät kann zumindest einer Ladeschnittstelle zum Aufladen eines mit der Ladeschnittstelle zur Energieübertragung verbundenen Mediengerätes und/oder Ein-Ausgabegerätes umfassen. Durch die Integration einer Ladeschnittstelle wird die Nutzungsdauer darüber aufladbarer Mediengeräte und/oder Ein-Ausgabegeräte erhöht und die Anzahl notwendiger Peripheriegeräte zum, insbesondere mobilen, Betrieb der Mediengeräte weiter reduziert. Erfindungsgemäß kann das Ladegerät auch ohne Ladeschnittstelle für ein externes Gerät ausgebildet sein, um insbesondere für Anwendungsfälle, in denen ein mobiles Aufladen eines Mediengerätes und/oder Ein-Ausgabegerätes entbehrlich ist, Gewicht zu sparen und die Mobilität und den Tragekomfort zu erhöhen.

Die Ladeschnittstelle kann zum Aufladen des Energiespeichers aus einer externen Energiequelle ausgelegt sein. Dadurch ist keine separate Schnittstelle zum Aufladen des Energiespeichers notwendig, wodurch das Ladegerät einfacher, leichter, kleiner und kostengünstiger aufgebaut sein kann.

Die Ladeschnittstelle kann die Datenschnittstelle und/oder die Medienschnittstelle umfassen. Das heißt, über die Ladeschnittstelle können neben Energie auch Daten an ein Mediengerät und/oder ein Ein-Ausgabegerät übertragen werden. Das kann beispielsweise durch eine Ausgestaltung der Ladeschnittstelle als USB-Schnittstelle erreicht werden. Dadurch kann vorteilhafterweise die Anzahl benötigter Komponenten für das Ladegerät und/oder notwendiger Kabel zur Verbindung mit Mediengeräten und/oder Ein-Ausgabegeräten reduziert werden.

Die Ladeschnittstelle kann zumindest eine Induktionsspule zum kabellosen Aufladen des Mediengerätes, des Ein-Ausgabegeräts und/oder des Energiespeichers umfassen. Das Aufladen kann dabei insbesondere gemäß einem Industriestandard, beispielsweise gemäß dem Qi-Standard, erfolgen. Durch kabelloses Aufladen entfällt vorteilhafterweise die Notwendigkeit, ein Ladekabel vorzuhalten, und mögliche Fehlfunktionen durch Kabelbrüche oder verschmutzte und/oder verschlissene elektrische Kontakte sind ausgeschlossen. Durch Verwendung eines Industriestandards zur Energieübertragung ist das Ladegerät zu einer möglichst großen Anzahl von Mediengeräten und Ein-Ausgabegeräten kompatibel.

Die Ladeschnittstelle kann zumindest eine Ladebuchse, bevorzugt gemäß einem Industriestandard, zum kabelgebundenen Aufladen des Mediengerätes, des Ein-Ausgabegeräts und/oder des Energiespeichers umfassen. Die Ladebuchse kann beispielsweise eine USB-, beispielsweise Standard-USB-, Mini-USB-, Micro-USB und/oder USB-Typ-C-Buchse, und/oder Lightning-Buchse sein. Kabelgebundenes Aufladen bietet die Vorteile kostengünstiger Komponenten, einer hohen Leistungsübertragung und somit geringen Ladedauer und einer effizienten Energieübertragung. Durch Verwendung einer Ladebuchse gemäß einem Industriestandard ist das Ladegerät zu einer möglichst großen Anzahl von Mediengeräten und Ein-Ausgabegeräten kompatibel.

Die Datenschnittstelle kann zum Austausch von Daten mit zumindest zwei mit der Datenschnittstelle kommunikativ verbundenen Mediengeräten ausgelegt sein. Dazu kann die Datenschnittstelle beispielsweise ein Kommunikationsmodul zur gleichzeitigen Verbindung mit mehreren Mediengeräten oder eine Mehrzahl von Kommunikationsmodulen zur Verbindung mit jeweils einem Mediengerät umfassen. Im letzteren Fall können die Daten der Mehrzahl von Kommunikationsmodulen beispielsweise von der Recheneinheit zusammengeführt werden. Durch die gleichzeitige kommunikative Verbindung der Datenschnittstelle mit zwei, drei oder mehr Mediengeräten kann ein Nutzer besonders komfortabel zwischen mehreren Mediengeräten umschalten, beispielsweise zwischen einem privaten und einem dienstlichen Handy oder bei der Bearbeitung von Video- und/oder Audiodateien auf mehreren Mediengeräten.

Die Datenschnittstelle kann ein Kommunikationsmodul zum drahtlosen Senden und/oder Empfangen von Daten, bevorzugt gemäß einem Industriestandard, umfassen. Das Kommunikationsmodul kann beispielsweise ein Bluetooth-Modul und/oder WLAN-Modul sein. Durch das erfindungsgemäße Kommunikationsmodul ist keine Kabelverbindung zur Datenübertragung zwischen dem Ladegerät und dem Mediengerät notwendig. Dadurch kann das Ladegerät unabhängig von dem Mediengerät bewegt werden, was die Bewegungsfreiheit und den Bedienkomfort für einen Nutzer erhöht. Zum Beispiel kann zur Steuerung eines Smartphones von einem Nutzer lediglich das Ladegerät hervorgeholt werden, während das Smartphone in einer Tasche verbleibt und somit vor Diebstahl und Beschädigungen geschützt ist. Auch kann zum Beispiel nur das Ladegerät von einem Nutzer gut zugänglich, beispielsweise an einem Arm des Nutzers befestigt, getragen werden, während das - in der Regel größere und/oder schwerere - Mediengerät so transportiert wird, dass es den Nutzer nicht in seiner Bewegung behindert, beispielsweise in einer Kleidungstasche oder einem Rucksack. Ein solcher getrennter Transport ist insbesondere bei sportlichen Aktivitäten, wie beim Jogging, vorteilhaft um ohne Behinderung oder Unterbrechung des Bewegungsablaufs das Mediengerät jederzeit einfach steuern zu können. Ein ähnlicher Vorteil ergibt sich auch für Motorradfahrer, die durch ein, beispielsweise am Lenker befestigtes, Ladegerät zum Beispiel ein Smartphone steuern können, ohne dafür die Hände vom Lenker zu nehmen und/oder die Blickrichtung von der vor ihnen liegenden Straße abzuwenden. Dieser Vorteil lässt sich mit dem Ladegerät deutlich kostengünstiger erreichen als beispielsweise mit einem Bluetooth-Helm.

Der Energiespeicher kann zumindest eine Batterie und/oder einen Akkumulator, bevorzugt zumindest einen Lithium-Ionen-Akkumulator, umfassen. Um einem batteriebetriebenen Mediengerät ausreichend Energie zur Verfügung stellen zu können, kann der Akkumulator beispielsweise eine Kapazität von mindestens 500 mAh, insbesondere mindestens 650 mAh, aufweisen. Der Energiespeicher kann austauschbar sein, damit der Betrieb des Ladegeräts nicht zum Laden des Energiespeichers unterbrochen werden muss und um die Lebensdauer des Ladegeräts zu steigern. Das Ladegerät kann einen weiteren Energiespeicher umfassen, damit die Energieversorgung des Ladegeräts während eines Austauschs des austauschbaren Energiespeichers nicht unterbrochen wird.

Die Medienschnittstelle kann zumindest eine Audiobuchse, bevorzugt gemäß einem Industriestandard, zum kabelgebundenen Anschluss eines Kopfhörers und/oder Mikrofons umfassen. Die Audiobuchse kann zum Beispiel eine Lightning-Buchse und/oder eine Klinkenbuchse, insbesondere eine 3,5-mm-Klinkenbuchse umfassen. Durch eine erfindungsgemäße Audiobuchse kann eine Vielzahl von handelsüblichen Kopfhörern, Mikrofonen und Headsets zuverlässig mit dem Ladegerät verbunden werden.

Die Recheneinheit kann zum Decodieren von, insbesondere komprimierten, Daten ausgelegt sein. Wenn das Decodieren von Daten, insbesondere Audio- und/oder Videodaten, die abgespielt werden sollen, nicht durch ein Mediengerät sondern durch die Recheneinheit des Ladegerätes erfolgt, wird dadurch seitens des Mediengerätes Energie eingespart und die Nutzungsdauer des Mediengerätes erhöht.

Die Recheneinheit kann zumindest einen Analog-Digital-Wandler und/oder Digital-Analog-Wandler umfassen. Dadurch können analoge und digitale Daten ineinander konvertiert werden, wodurch über das Ladegerät kostengünstige Analog-Ein-Ausgabegeräte, beispielsweise Kopfhörer, mit Mediengeräten verbunden werden können, die nicht für eine direkte Verbindung mit Analog-Ein-Ausgabegeräten ausgelegt sind.

Das Ladegerät kann zumindest eine Anzeigevorrichtung, bevorzugt mit einer Anzahl von Leuchtdioden und/oder zumindest einem Bildschirm, insbesondere einer LCD-Anzeige, einer OLED-Anzeige und/oder einem Touchscreen, umfassen. Mit der Anzeigevorrichtung können einem Nutzer auf einfache und komfortable Weise beispielsweise ein Ladezustand des Energiespeichers und/oder Informationen zum Betriebszustand eines mit dem Ladegerät kommunikativ verbundenen Mediengerätes vermittelt werden, insbesondere ohne dass das Mediengerät für den Nutzer sichtbar ist. Dadurch muss sich der Nutzer zum Erhalt der Informationen nicht zu dem Mediengerät begeben und/oder das Mediengerät hervorholen.

Das Ladegerät kann zumindest eine Eingabevorrichtung, bevorzugt mit zumindest einer Haupttaste, der besonders bevorzugt eine Seitenfläche des Ladegeräts im Wesentlichen vollständig einnimmt, umfassen. Die Eingabevorrichtung kann einen Touchscreen, ein Touchpad, einen Schalter, insbesondere einen Wippschalter, einen Drehregler und/oder eine Taste umfassen. Eine Taste kann beispielsweise eine mechanische, kapazitive und/oder resistive Taste, insbesondere mit haptischer Rückmeldung, und/oder zumindest ein Teilbereich eines Touchpads und/oder Touchscreens sein. Mit der Eingabevorrichtung kann ein Nutzer auf einfache und komfortable Weise beispielsweise Steuerbefehle für das Ladegerät und/oder das Mediengerät eingeben, insbesondere ohne dass der Nutzer direkt auf das Mediengerät zugreift. Dadurch muss sich der Nutzer zur Steuerung nicht zu dem Mediengerät begeben und/oder das Mediengerät hervorholen. Eine einzelne Haupttaste erlaubt eine besonders intuitive und einfache Bedienung, insbesondere wenn er eine Seitenfläche des Ladegerätes im Wesentlichen vollständig einnimmt.

Das Ladegerät kann ein das Ladegerät im Wesentlichen vollständig umschließendes Gehäuse aufweisen, das bevorzugt im Wesentlichen quaderförmig, besonders bevorzugt mit abgerundeten Kanten, ist. Ein Gehäuse schützt das Ladegerät vor schädlichen Umwelteinflüssen. In einem quaderförmigen Gehäuse können elektronische Standardbauteile auf besonders platzsparende Weise angeordnet werden, und es kann vom Nutzer gut am Körper, an und/oder in Kleidungsstücken getragen werden. Abgerundete Kanten verringern bei Zusammenstößen des Gehäuses mit einem Fremdkörper die Gefahr von Beschädigungen des Gehäuses und/oder des Fremdkörpers. Das Gehäuse kann beispielsweise ein flaches Aspektverhältnis haben und eine Grundfläche aufweisen, welche in übliche Hemd-, Jacken-und/oder Hosentaschen passt. Beispielsweise kann es quaderförmig sein, insbesondere mit Kantenlängen, die jeweils weniger als 10 cm, 6 cm und 2 cm, beispielsweise jeweils weniger als 7,5 cm, 5,5 cm und 1,5 cm, insbesondere jeweils etwa 5 cm, etwa 3 cm und etwa 1 cm, betragen.

Das Gehäuse kann zumindest eine Haltevorrichtung zur Befestigung des Ladegeräts an einem Kleidungsstück umfassen, wobei die Haltevorrichtung bevorzugt zumindest eine Klammer, eine Nadel und/oder einen Magneten umfasst. Eine Haltevorrichtung erleichtert das komfortable und/oder ergonomische Tragen des Ladegeräts und erlaubt vorteilhafterweise mehr Freiraum und/oder Konfigurationsmöglichkeiten von Mediengerät und Ein-Ausgabegerät beispielsweise an einem Körper.

Das Ladegerät kann zumindest einen Lautsprecher, ein Mikrofon, einen einziehbaren Kopfhörer, einen RFID-Transponder, eine Positionsbestimmungseinheit, einen Vibrationsmotor, eine Vibrationsspule und/oder einen Bewegungssensor umfassen. Durch die Integration der genannten Komponenten wird der Funktionsumfang des Ladegeräts erweitert und/oder das Ladegerät kann weitere Peripheriegeräte ersetzen, wodurch die Nutzung der zugehörigen Mediengeräte vereinfacht und komfortabler wird.

Mit einem RFID-Transponder kann das Ladegerät beispielsweise als kontaktloser "Schlüssel" zum Öffnen von Türen mit RFID-Scannern verwendet werden. Dadurch können Türen geöffnet werden, ohne unnötig viele Oberflächen zu berühren, wodurch, insbesondere in einer Kranken- und/oder Pflegeeinrichtung, die Hygiene verbessert und die Ausbreitung von Krankheiten eingedämmt werden kann. Außerdem können dem RFID-Transponder mitarbeiterspezifische Zugangsberechtigungen zugewiesen werden, sodass jeder Mitarbeiter nur für ihn vorgesehene Bereiche betreten kann, ohne dass dafür viele unterschiedliche Schlüssel und Schlösser notwendig sind. Weiterhin kann mit einem RFID-Transponder auch die Position des Ladegeräts in einer mit RFID-Scannern ausgestatteten Umgebung bestimmt werden.

Eine Positionsbestimmungseinheit zur Bestimmung der Position des Ladegerätes kann beispielsweise einen RFID-Transponder, einen Drahtlosnetzwerkempfänger, insbesondere einen WLAN- oder Bluetooth-Empfänger, und/oder einen Empfänger zur satellitengestützten Positionsbestimmung, insbesondere einen GPS-Empfänger, umfassen. Durch die Positionsbestimmungseinheit kann ein Nutzer vorteilhafterweise seine Position bestimmen, ohne dazu weitere Peripheriegeräte oder entsprechende Funktionalitäten von Mediengeräten zu benötigen.

Durch einen Vibrationsmotor kann das Ladegerät einem Nutzer beispielsweise den Eingang einer Nachricht auf einem Mediengerät diskret signalisieren. Durch einen Bewegungssensor kann bei Bewegung des Ladegeräts eine Aktion ausgelöst, beispielsweise der Ladezustand des Energiespeichers angezeigt, werden, ohne dass ein Nutzer dafür eine Eingabevorrichtung betätigen muss.

Die Erfindung umfasst die Verwendung eines, insbesondere erfindungsgemäßen, tragbaren Ladegeräts zur Datenübertragung und/oder Datenkonvertierung zwischen zumindest einem Mediengerät und einem Ein-Ausgabegerät.

Das erfindungsgemäße Verfahren zum Nutzen eines tragbaren, insbesondere erfindungsgemäßen, Ladegeräts zur Erhöhung der Nutzungsdauer eines batteriebetriebenen Mediengerätes umfasst zumindest die folgenden Verfahrensschritte:
a. kommunikatives Verbinden einer Datenschnittstelle des Ladegeräts mit einer Anzahl von Mediengeräten, wobei ein Erkennen des Ladegeräts von den Mediengeräten als Audio-Eingabegerät und/oder -Ausgabegerät erfolgt;
b. Empfangen von Datensignalen von zumindest einem der mit der Datenschnittstelle verbundenen Mediengeräte
c. Konvertieren der empfangenen Daten in ein für die Wiedergabe durch ein mit einer Medienschnittstelle des Ladegerätes kommunikativ verbundenes Ein-Ausgabegerät geeignetes Datenformat und
d. Übertragen der konvertierten Daten an das Ein-Ausgabegerät.

Das Verfahren kann ein Einschalten und/oder Ausschalten des Ladegeräts umfassen. Das Einschalten kann beispielsweise durch ein Anschließen des Ein-Ausgabegerätes an dem Ladegerät, durch ein doppeltes schnelles Betätigen der Haupttaste und/oder durch ein Betätigen eines Einschalters des Ladegeräts erfolgen. Das Ausschalten kann beispielsweise durch ein Entfernen des Ein-Ausgabegerätes von dem Ladegerät und/oder durch ein Betätigen eines Ausschalters des Ladegeräts erfolgen, wobei der Ausschalter insbesondere mit dem Einschalter identisch sein kann.

Mit dem erfindungsgemäßen Verfahren können mit einem Ladegerät vorteilhafterweise Daten von dem Mediengerät an ein mit dem Mediengerät, beispielsweise bezüglich des verwendeten Datenformats und/oder der verfügbaren Schnittstellen, inkompatibles Ein-Ausgabegerät übertragen werden. So kann beispielsweise der Ton einer von einem Smartphone abgespielte Musikdatei über an dem Ladegerät angeschlossene Kopfhörer wiedergegeben werden.

Indem das Ladegerät von den Mediengeräten als Audio-Eingabegerät und/oder - Ausgabegerät erkannt wird, können die Mediengeräte das Ladegerät zur Wiedergabe und/oder Aufnahme von Audiosignalen nutzen.

Neben dem Empfangen von Daten von dem Mediengerät und Übertragen daraus konvertierter Daten an das Ein-Ausgabegerät umfasst das Verfahren bevorzugt auch den umgekehrten Weg, also das Empfangen von Daten von dem Ein-Ausgabegerät und Übertragen daraus konvertierter Daten an das Mediengerät. Auf diese Weise kann beispielsweise ein Telefonat über ein an dem Ladegerät angeschlossenes Headset mit einem mit dem Ladegerät kommunikativ verbundenen Handy geführt werden.

Das kommunikative Verbinden kann drahtlos erfolgen, wodurch keine, möglicherweise hinderliche Kabelverbindung zwischen dem Ladegerät und dem Mediengerät notwendig ist. Das Verfahren kann ein kommunikatives Verbinden der Datenschnittstelle mit einer Mehrzahl von Mediengeräten umfassen. Dadurch kann ein Nutzer eine Mehrzahl von Mediengeräten besonders komfortabel nutzen.

Das Verfahren kann ein kommunikatives Verbinden der Datenschnittstelle mit zumindest einem weiteren Ladegerät und/oder ein weiterleiten der empfangenen Daten an das weitere Ladegerät umfassen. Dadurch können vorteilhafterweise Daten von dem Mediengerät über das Ladegerät an das weitere Ladegerät übertragen werden. Auch der umgekehrte Weg, dass Daten von dem weiteren Ladegerät über das Ladegerät an das Mediengerät übertragen werden, ist möglich. Darüber hinaus kann das Weiterleiten auch über eine Mehrzahl von weiteren Ladegeräten erfolgen, beispielsweise um eine lange Distanz zwischen dem Mediengerät und einem mit einem weiteren Ladegerät verbundenen Ein-Ausgabegerät zu überbrücken.

Das Verfahren kann ein automatisches Stummschalten aller anderen Mediengeräte umfassen, wenn auf einem der mit der Datenschnittstelle verbundenen Mediengeräte ein Anruf eingeht. Dadurch kann ein Nutzer den Anruf entgegennehmen ohne von Tonausgaben von den anderen Mediengeräten gestört zu werden.

Das Verfahren kann ein Eingeben von Steuerbefehlen für zumindest eines der mit der Datenschnittstelle verbundenen Mediengeräte über eine Eingabevorrichtung des Ladegeräts umfassen, wobei ein Eingeben unterschiedlicher Steuerbefehle bevorzugt über eine Haupttaste des Ladegeräts erfolgt, der je nach Situation und Art der Bedienung unterschiedliche Steuerbefehle auslöst. Durch das Eingeben unterschiedlicher Steuerbefehle über eine Haupttaste kann das Ladegerät mit besonders wenigen Komponenten aufgebaut sein,

Das Verfahren kann ein Senden von Steuerbefehlen über die Datenschnittstelle an das zumindest eine damit verbundene Mediengerät umfassen.

Das Verfahren kann ein Anzeigen des Ladestatus eines Energiespeichers des Ladegeräts durch eine Anzeigevorrichtung des Ladegeräts, bevorzugt durch eine Anzahl von Leuchtdioden, umfassen. Beispielsweise kann das Anzeigen, wenn das Ladegerät ausgeschaltet ist, durch ein einfaches, kurzes Betätigen der Haupttaste und/oder, wenn das Ladegerät eingeschaltet ist durch eine Bewegung des Ladegeräts ausgelöst werden. So kann beispielsweise der Ladestatus automatisch angezeigt werden, wenn ein Nutzer das Ladegerät aus einer Tasche hervorholt. Alternativ kann der Ladezustand bei eingeschaltetem Ladegerät auch permanent angezeigt werden.

Das Verfahren kann ein Koppeln eines Mediengerätes und/oder Ein-Ausgabegerätes an eine Ladeschnittstelle des Ladegeräts zum Aufladen des Mediengerätes und/oder Ein-Ausgabegerätes aus einem Energiespeicher des Ladegeräts und/oder zum Aufladen des Energiespeichers aus dem Mediengerät umfassen. Durch das Aufladen des Mediengerätes und/oder Ein-Ausgabegerätes wird dessen jeweilige Nutzungsdauer verlängert. Wenn das Mediengerät ausreichend geladen ist, der Energiespeicher des Ladegeräts jedoch nicht, kann vorteilhafterweise der Energiespeicher aus dem Mediengerät aufgeladen werden.

Das Verfahren kann ein Darstellen von Daten eines mit der Datenschnittstelle, insbesondere drahtlos, kommunikativ verbundenen Fitness-Überwachungsgerätes durch eine Anzeigevorrichtung des Ladegeräts umfassen. Das Fitness-Überwachungsgerät kann beispielsweise ein Fahrradcomputer, eine Smartwatch, ein Pulsmesser, ein Fitness-Armband und/oder ein Activity Tracker sein. Dadurch können zum Beispiel eine gemessene Pulsfrequenz durch eine Anzahl von Leuchtdioden und/oder Messwerte grafisch oder textlich auf einem Bildschirm des Ladegeräts angezeigt werden. Darüber hinaus können auch von dem Fitness-Überwachungsgerät Tonsignale, wie beispielsweise Musik oder Trainingsanweisungen, über das Ladegerät beispielsweise an daran angeschlossene Kopfhörer übertragen werden.

Die Haupttaste kann jeweils unterschiedliche Steuerbefehle auslöst, je nachdem, ob
a. an einem der mit der Datenschnittstelle verbundenen Mediengeräte ein Anruf eingeht oder nicht;
b. über das Ladegerät ein Telefongespräch geführt wird oder nicht;
c. von einem der Mediengeräte Mediendaten empfangen werden oder nicht;
d. die Haupttaste einmal oder mehrmals schnell hintereinander betätigt wird und/oder
e. die Haupttaste kurz oder lang betätigt wird.

Die Steuerbefehle können Befehle zum Wiedergeben und Anhalten der Wiedergabe einer Mediendatei durch eines der mit der Datenschnittstelle verbundenen Mediengeräte umfassen. Beispielsweise kann das Starten und Anhalten der Wiedergabe jeweils durch einfaches Betätigen der Haupttaste ausgelöst werden.

Die Steuerbefehle können Befehle zum Annehmen und Beenden von Anrufen an einem der Mediengeräte umfassen. Beispielsweise kann ein eingehender Anruf durch einfaches Betätigen der Haupttaste angenommen und ein laufendes Telefongespräch durch langes Betätigen der Haupttaste beendet werden. Während eines Telefongesprächs kann das Ladegerät beispielsweise durch einfaches Betätigen der Haupttaste oder durch Betätigen einer Stumm-Taste des Ladegeräts stumm geschaltet werden.

Die Steuerbefehle können Befehle zum Verändern einer Lautstärke des Audiosignals umfassen. Die Lautstärke kann beispielsweise durch Betätigung von Lautstärke-Tasten, Lautstärke-Wippschaltern oder eines Lautstärke-Rades an dem Ladegerät oder an daran angeschlossenen Kopfhörern verändert werden. Die Eingabe von Steuerbefehlen an dem Ladegerät ist häufig intuitiver und komfortabler als an den angeschlossenen Kopfhörern.

Die Steuerbefehle können Befehle zum Zurückspringen an den Anfang einer von einem der Mediengeräte wiedergegebenen Mediendatei und/oder zu einer zuvor wiedergegebenen Mediendatei umfassen. Zum Zurückspringen kann beispielsweise die Haupttaste dreifach schnell hintereinander betätigt werden oder eine Rückspring-Taste an dem Ladegerät betätigt werden.

Die Steuerbefehle können Befehle zum Vorspringen zu einer in einer Wiedergabeliste eines der Mediengeräte folgenden Mediendatei umfassen. Zum Vorspringen kann beispielsweise die Haupttaste doppelt schnell hintereinander betätigt werden oder eine Vorspring-Taste an dem Ladegerät betätigt werden.

Die Steuerbefehle können Befehle zum Vor- und/oder Zurückspulen innerhalb einer von einem der Mediengeräte wiedergegebenen Mediendatei umfassen. Zum Vorspulen kann beispielsweise die Haupttaste doppelt schnell hintereinander betätigt und beim zweiten Betätigen gehalten werden, bis die gewünschte Stelle der Mediendatei erreicht ist. Alternativ kann zum Vorspulen eine Vorspul-Taste an dem Ladegerät betätigt werden. Zum Zurückspulen kann beispielsweise die Haupttaste dreifach schnell hintereinander betätigt und beim dritten Betätigen gehalten werden, bis die gewünschte Stelle der Mediendatei erreicht ist. Alternativ kann zum Zurückspulen eine Rückspul-Taste an dem Ladegerät betätigt werden.

Die Steuerbefehle können Befehle zum Aktivieren und/oder Deaktivieren einer Sprachsteuerung und/oder eines sprachgesteuerten Assistenten eines der Mediengeräte umfassen. Das Aktivieren kann beispielsweise durch ein langes Betätigen der Haupttaste erfolgen.

Ein erfindungsgemäßes System zur Koordinierung der Arbeit von einer Anzahl von Mitarbeitern durch eine Mitarbeiterleitstelle zeichnet sich dadurch aus, dass jeder Mitarbeiter zumindest ein erfindungsgemäßes Ladegerät mit sich führt und die Leitstelle ein als Server ausgebildetes Mediengerät umfasst.

Bei den Mitarbeitern kann es sich zum Beispiel um das medizinische und/oder Pflegepersonal einer Pflegeeinrichtung und/oder eines Krankenhauses handeln. Die Ladegeräte können vorteilhafterweise jeweils eine kommunikative Verbindung mit dem Server herstellen, über die die Mitarbeiter Audio- und/oder Textnachrichten mit dem Server, mit der Mitarbeiterleitstelle und/oder mit anderen Mitarbeitern austauschen können. Durch von der Mitarbeiterleitstelle über die Ladegeräte übermittelte Audio- und/oder Textnachrichten können die Mitarbeiter schnell und effizient dorthin dirigiert werden, wo sie benötigt werden, beispielsweise zu einem Patienten in einer akuten Notlage. Weiterhin können die Mitarbeiter schnell und verständlich über ihre bevorstehenden Aufgaben, beispielsweise die Art der Notlage eines Patienten informiert werden, und gegebenenfalls Rücksprache mit der Mitarbeiterleitstelle oder anderen Mitarbeitern halten. Insbesondere kann mit dem erfindungsgemäßen System eine besser verständliche und somit weniger fehleranfällige Kommunikation als mit üblichen Methoden wie Funkgeräten, Pagern und Telefonen erreicht werden. Weiterhin entfällt die zeitraubende Suche nach einem bestimmten Mitarbeiter, da alle Mitarbeiter jederzeit über die von ihnen mitgeführten Ladegeräte erreichbar sind. Dadurch können Arbeitsabläufe schneller und zuverlässiger gestaltet, Kosten gespart und, beispielsweise bei medizinischen Notfällen, Leben gerettet werden.

Das System kann eine Anzahl von Lokalisierungseinrichtungen zur Lokalisierung der Ladegeräte umfassen, wobei die Lokalisierungseinrichtungen bevorzugt eine Anzahl von RFID-Scannern und/oder Drahtlosnetzwerk-Zugangspunkten, besonders bevorzugt WLAN-Zugangspunkten und/oder Bluetooth-Zugangspunkten, umfassen. Mit Hilfe von Lokalisierungseinrichtungen kann der aktuelle Aufenthaltsort der Ladegeräte und somit der die Ladegeräte mitführenden Mitarbeiter bestimmt werden, sodass die Mitarbeiterleitstelle eine Aufgabe jeweils dem qualifizierten Mitarbeiter zuweisen kann, der den Ort zur Bewältigung der Aufgabe am schnellsten erreichen kann. Mit RFID-Transpondern ausgestattete Ladegeräte können bei Annäherung an einen RFID-Scanner identifiziert werden. Wenn in einer Arbeitsumgebung, beispielsweise an Durchgängen zwischen einzelnen Räumen, ein ausreichend dichtes Netz von RFID-Scannern installiert ist, kann so bestimmt werden, wo, beispielsweise in welchem Raum, sich ein Ladegerät gerade aufhält. Wenn ein Ladegerät mit mehreren Drahtlosnetzwerk-Zugangspunkten gleichzeitig kommunikativ verbunden ist, kann aus einem Vergleich der vom Ladegerät empfangenen Signalstärken der einzelnen Zugangspunkte die Position des Ladegeräts relativ zu den Zugangspunkten, beispielsweise durch Triangulation, von einer Recheneinheit des Ladegerätes oder von dem Server berechnet werden.

Das System kann eine Anzahl von Meldeeinrichtungen zum Melden einer Aufgabe und eines Ortes zur Bewältigung der Aufgabe an die Mitarbeiterleitstelle umfassen. Durch Meldeeinrichtungen, wie beispielsweise Notruftasten, Ruftasten und/oder Gegensprechanlagen, können vorteilhafterweise auch Personen, die kein Ladegerät tragen, beispielsweise Patienten eines Krankenhauses, Aufgaben an die Mitarbeiterleitstelle melden. Darüber hinaus können der Mitarbeiterleitstelle beispielsweise auch Aufgaben telefonisch oder per Sprechfunk mitgeteilt werden. Zum Beispiel kann die Besatzung eines Rettungstransports, der einen Patienten in ein Krankenhaus einliefert, schon auf dem Weg in das Krankenhaus die Bedürfnisse des Patienten der Mitarbeiterleitstelle mitteilen, sodass die Mitarbeiterleitstelle einen geeigneten Arzt und/oder Pfleger zum Aufnahmeort des Patienten schicken kann. Alternativ kann die Besatzung des Rettungstransports die Bedürfnisse des Patienten auch über ein mobiles Computergerät eingeben und an den Server der Mitarbeiterleitstelle schicken.

Ein erfindungsgemäßes Koordinierungsverfahren zur Koordinierung der Arbeit von einer Anzahl von Mitarbeitern durch eine Mitarbeiterleitstelle mit einem erfindungsgemäßen System umfasst zumindest folgende Verfahrensschritte:
a. Ermitteln der zur Bewältigung einer Aufgabe geeigneten und verfügbaren Mitarbeiter;
b. Lokalisieren der ermittelten Mitarbeiter anhand der von ihnen mitgeführten Ladegeräte mit Hilfe der Lokalisierungseinrichtungen;
c. Auswählen des dem Ort zur Bewältigung der Aufgabe nächsten lokalisierten Mitarbeiters und
d. Benachrichtigen des dem Ort zur Bewältigung der Aufgabe nächsten geeigneten Mitarbeiters über den Ort und die Aufgabe durch das von dem Mitarbeiter getragene Ladegerät.

Das Ermitteln der geeigneten und verfügbaren Mitarbeiter kann beispielsweise anhand von zumindest einer die Qualifikationen, Dienstpläne und/oder Terminkalender der Mitarbeiter enthaltenden Datenbank erfolgen. Das Ermitteln der Verfügbarkeit kann auch Anhand der Lokalisierung der Mitarbeiter erfolgen. Beispielsweise können nur Mitarbeiter, die sich an ihrem Arbeitsplatz und/oder auf einem Betriebsgelände befinden, als verfügbar angesehen werden; oder Ärzte oder Pfleger, die sich in einem Operationssaal befinden, können als nicht verfügbar angesehen werden. Wenn kein verfügbarer Mitarbeiter gefunden wird, können auch nicht verfügbare Mitarbeiter, die beispielsweise laut Dienstplan gerade Pause haben, ausgewählt werden. Das Ermitteln, Lokalisieren und/oder Auswählen kann beispielsweise durch den Server, durch ein Computernetzwerk, durch Personal der Mitarbeiterleitstelle und/oder durch externe Dienstleister erfolgen.

Das Benachrichtigen kann beispielsweise durch eine von dem Ladegerät übertragene Sprachnachricht und/oder eine von dem Ladegerät angezeigte grafische und/oder textliche Nachricht erfolgen. Die Nachricht kann beispielsweise durch ein, insbesondere je nach Dringlichkeit abgestuftes von dem Ladegerät wiedergegebenes Licht-, Ton- und/oder Vibrationssignal angekündigt werden. Insbesondere kann die Nachricht durch das Aufleuchten einer je nach Dringlichkeit mehr oder weniger großen Anzahl von Leuchtdioden angekündigt werden.

Das Koordinierungsverfahren kann ein Melden der Aufgabe und/oder des Ortes zur Bewältigung der Aufgabe durch einen Melder an die Mitarbeiterleitstelle umfassen. Das Melden kann beispielsweise durch ein Betätigen einer Meldeeinrichtung, insbesondere das Betätigen einer Ruftaste; durch eine mit einem Ladegerät übertragene Sprach- und/oder Textnachricht und/oder durch einen Telefon- oder Sprechfunkanruf erfolgen. Bei dem Melder kann es sich zum Beispiel um einen Mitarbeiter, einen Patienten oder ein Besatzungsmitglied eines Rettungstransports handeln.

Das Koordinierungsverfahren kann ein Bestätigen oder Ablehnen der Übernahme der durch das Benachrichtigen erhaltenen Aufgabe durch den benachrichtigten Mitarbeiter mit Hilfe des von dem Mitarbeiter getragenen Ladegeräts umfassen. Das Bestätigen kann beispielsweise durch ein, insbesondere einfaches Betätigen, einer Haupttaste des Ladegeräts durch den Mitarbeiter erfolgen. Das Ablehnen kann beispielsweise durch ein, insbesondere schnell doppeltes, Betätigen einer Haupttaste des Ladegerätes erfolgen.

Im Fall eines Bestätigens kann, insbesondere automatisch, eine Sprachverbindung zwischen dem bestätigenden Mitarbeiter und dem Melder und/oder der Mitarbeiterleitstelle über das Ladegerät aufgebaut werden. Die Sprachverbindung kann beispielsweise über einen mit der Datenschnittstelle des Ladegerätes kommunikativ verbundenen Drahtlosnetzwerk-Zugangspunkt, wie einen Bluetooth- und/oder WLAN-Sende-Empfänger, der mit dem Server kommunikativ verbunden ist, vermittelt werden. Alternativ und/oder ergänzend kann die Sprachverbindung auch über ein mit der Datenschnittstelle des Ladegerätes kommunikativ verbundenes Mediengerät, beispielsweise über ein Handy, das über ein Mobilfunknetz kommunikativ mit der Mitarbeiterleitstelle verbunden ist, vermittelt werden. Über eine Sprachverbindung kann der Mitarbeiter schnell und umfassend über seine Aufgabe informiert werden, insbesondere noch bevor er den Ort der Aufgabe erreicht, und gegebenenfalls Rückfragen mit dem Melder und/oder der Mitarbeiterleitstelle klären. Die Spracheingabe und Sprachausgabe an dem Ladegerät kann beispielsweise über ein an der Medienschnittstelle angeschlossenes Ein-Ausgabegerät, ein in dem Ladegerät integriertes Mikrofon, einen in dem Ladegerät integrierten Lautsprecher und/oder andere mit dem Ladegerät kommunikativ verbundene Lautsprecher, Kopfhörer und/oder Mikrofone erfolgen.

Im Fall eines Ablehnens kann ein Auswählen und Benachrichtigen des dem Ort zur Bewältigung der Aufgabe nächst nächsten lokalisierten Mitarbeiters erfolgen. Diese Verfahrensschritte können so lange zyklisch durchlaufen werden, bis durch einen benachrichtigten Mitarbeiter ein Annehmen erfolgt.

Ein Ladegerät kann mit Hilfe der Lokalisierungseinrichtungen, des Servers und/oder einem Empfänger zur satellitengestützten Positionsbestimmung des Ladegerätes, zum Beispiel einem GPS-Empfänger, seine Position bestimmen. Dadurch kann das Ladegerät vorteilhafterweise dem das Ladegerät mitführenden Mitarbeiter ortsabhängig relevante Informationen zur Verfügung stellen, beispielsweise über eine Anzeigevorrichtung anzeigen oder über ein angeschlossenes Ein-Ausgabegerät wiedergeben. Zum Beispiel kann das Ladegerät einem Arzt und/oder Pfleger den Namen und/oder die Diagnose eines Patienten anzeigen und/oder per Sprachausgabe mitteilen, in dessen Krankenzimmer sich der Arzt oder Pfleger gerade befindet.

Das Koordinierungsverfahren kann ein Aufbauen einer Sprachverbindung zwischen einem ein Ladegerät mitführenden Mitarbeiter und der Mitarbeiterleitstelle und/oder einem Spracherkennungssystem über das Ladegerät bei einer Betätigung einer Eingabevorrichtung des Ladegeräts umfassen. Das Aufbauen kann beispielsweise bei einer, insbesondere einfachen, Betätigung einer Haupttaste des Ladegeräts erfolgen. Insbesondere wenn der Mitarbeiter eine Frage an einen anderen Mitarbeiter hat, kann die Mitarbeiterleltstelle und/oder das Spracherkennungssystem eine Sprachverbindung zu dem anderen Mitarbeiter herstellen. Auf diese Weise können Mitarbeiter Fragen schnell und effizient untereinander und/oder mit der Mitarbeiterleitstelle klären, insbesondere ohne den momentanen Aufenthaltsort oder eine Handynummer des Befragten zu kennen und ohne von einem verfügbaren Telefonnetz abhängig zu sein. Insbesondere kann die Kommunikation über das Ladegerät auch dann funktionieren, wenn andere Kommunikationswege, beispielsweise kabelgebundene Telefonnetze oder Mobilfunknetze nicht verfügbar sind.

Das Koordinierungsverfahren kann ein Protokollieren der Aufenthaltszeiten eines ein Ladegerät tragenden Mitarbeiters an seinem Arbeitsort, insbesondere durch das Ladegerät oder durch den Server umfassen. Dadurch können die tatsächlichen Arbeitszeiten der Mitarbeiter einfacher und komfortabler bestimmt werden als beispielsweise mit einer Stempeluhr. Weiterhin kann das Ladegerät die Mitarbeiter auch über das Ende ihrer jeweiligen Schicht informieren.

Ein besonderer Vorteil des erfindungsgemäßen Systems und Koordinierungsverfahrens ist, dass sich die verwendete Technologie nahtlos in eine Arbeitsumgebung einfügt, ohne, beispielsweise im Gegensatz zu Mitarbeiter-Rufsystemen über Lautsprecher, eine Ablenkung oder Störung darzustellen.

Das erfindungsgemäße Verfahren und/oder Koordinierungsverfahren kann beispielsweise durch eine computergestützte Applikation, insbesondere auf einem Mediengerät wie beispielsweise einem Smartphone, implementiert sein. Daraus ergibt sich der besondere Vorteil, dass das Verfahren und/oder Koordinierungsverfahren ohne spezielle Hardware ausgeführt werden kann.

Nachfolgend wird die Erfindung anhand von Ausführungsbeispielen beschrieben, die mit Hilfe der Figuren näher erläutert werden.

Es zeigen:
- Fig. 1: eine schematische Darstellung eines beispielhaften erfindungsgemäßen Ladegeräts;
- Fig. 2: schematisch beispielhafte Verbindungen eines erfindungsgemäßen Ladegerätes mit einem Mediengerät und einem Ein-Ausgabegerät;
- Fig. 3: schematisch beispielhafte Verbindungen mehrerer erfindungsgemäßer Ladegeräte mit einem Mediengerät und einem Ein-Ausgabegerät
- Fig. 4: eine schematische Schrägansicht eines beispielhaften erfindungsgemäßen Ladegeräts;
- Fig. 5: eine schematische Schrägansicht eines weiteren beispielhaften erfindungsgemäßen Ladegeräts;
- Fig. 6: eine schematische Darstellung eines beispielhaften erfindungsgemäßen Verfahrens;
- Fig. 7: schematisch ein beispielhaftes erfindungsgemäßes System und
- Fig. 8: schematisch ein beispielhaftes erfindungsgemäßes Koordinierungsverfahren.

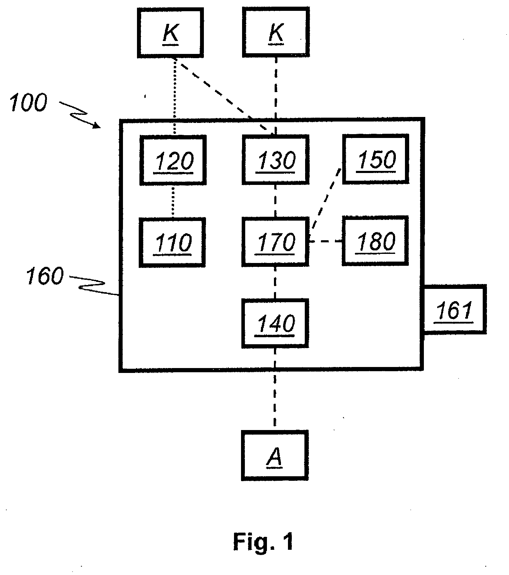

Figur 1 zeigt eine schematische Darstellung eines beispielhaften erfindungsgemäßen Ladegeräts 100. Das dargestellte Ladegerät 100 enthält einen Energiespeicher 110, beispielsweise einen Lithium-Ionen-Akkumulator. Über eine Ladeschnittstelle 120, beispielsweise eine Micro-USB-Buchse, des Ladegeräts 100 kann ein daran angeschlossenes Mediengerät K, zum Beispiel ein Smartphone, aus dem Energiespeicher 110 aufgeladen werden. Die dafür notwendige Ladeverbindung ist durch gepunktete Linien angedeutet. Das dargestellte Ladegerät 100 enthält eine Recheneinheit 170, beispielsweise einen Mikroprozessor, eine Medienschnittstelle 140, beispielsweise mit einer Kopfhörerbuchse, und eine Datenschnittstelle 130, beispielsweise ein Bluetooth-Modul. Von einer Anzahl von, im dargestellten Beispiel zwei, Mediengeräten K, können Datensignale über die Datenschnittstelle 130 an die Recheneinheit 170 übertragen werden. Die Recheneinheit 170 kann die Datensignale in Audiosignale umwandeln und über die Medienschnittstelle 140 an ein daran angeschlossenes Ein-Ausgabegerät A, beispielsweise einen Kopfhörer, übertragen. Das dargestellte Ladegerät 100 umfasst eine Eingabevorrichtung 150, beispielsweise eine Taste, zur Steuerung des Ladegeräts 100 und/oder der Mediengeräte K und eine Anzeigevorrichtung 180, beispielsweise mit einer Anzahl von Leuchtdioden. Die Eingabevorrichtung 150 und die Anzeigevorrichtung 180 sind kommunikativ mit der Recheneinheit 170 verbunden. Die genannten Signal- und Kommunikationswege sind durch gestrichelte Linien angedeutet. Das dargestellte Ladegerät wird von einem Gehäuse 160 umschlossen, das eine Haltevorrichtung 161, beispielsweise eine Klammer, zur Befestigung des Ladegeräts an einem Kleidungsstück aufweist.

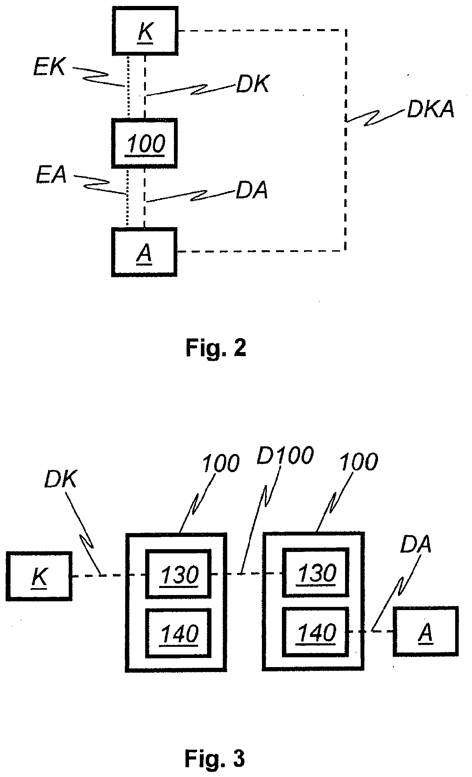

Figur 2 zeigt schematisch beispielhafte Verbindungen eines erfindungsgemäßen Ladegerätes 100 mit einem Mediengerät K und einem Ein-Ausgabegerät A. Das Ladegerät 100 kann über, beispielsweise kabelgebundene, Verbindungen EK, EA (gepunktet dargestellt) zur Energieübertragung mit dem Mediengerät K und/oder dem Ein-Ausgabegerät A verbunden sein. Über die Verbindungen EK und EA können das Mediengerät K und/oder das Ein-Ausgabegerät A aus dem Ladegerät 100 aufgeladen werden. Weiterhin kann das Ladegerät 100 mit dem Mediengerät K und dem Ein-Ausgabegerät A jeweils über kommunikative Verbindungen DK, DA (gestrichelt dargestellt) zur Datenübertragung verbunden sein. Die kommunikativen Verbindungen DK, DA können jeweils drahtlos oder kabelgebunden sein. Weiterhin können die kommunikativen Verbindungen DK, DA jeweils mit den Verbindungen EK, EA zur Energieübertragung zum gleichen Gerät zusammenfallen, beispielsweise in Form eines zur Energie- und Datenübertragung geeigneten Kabels, insbesondere eines USB-Kabels. Das erfindungsgemäße Ladegerät 100 erweist sich insbesondere dann als vorteilhaft, wenn eine direkte Datenübertragung zwischen dem Mediengerät K und dem Ein-Ausgabegerät A entlang einer kommunikativen Verbindung DKA (gestrichelt dargestellt), beispielsweise aufgrund inkompatibler Datenformate und/oder Schnittstellen, nicht möglich oder für das Mediengerät K energieintensiver ist als eine Datenübertragung zwischen dem Mediengerät K und dem Ladegerät 100 entlang deren kommunikativer Verbindung DK. Letzteres kann zum Beispiel zutreffen, wenn die Verbindung DK zwischen Mediengerät K und Ladegerät 100 kabelgebunden und die direkte Verbindung DKA zwischen Mediengerät und Ein-Ausgabegerät drahtlos ist oder die Verbindungen unterschiedlichen Verbindungsstandards genügen. Durch Verwendung des Ladegerätes 100 wird Seitens des Mediengerätes K Energie eingespart und somit die Nutzungsdauer des Mediengerätes K verlängert.

Figur 3 zeigt schematisch beispielhafte Verbindungen mehrerer erfindungsgemäßer Ladegeräte 100 mit einem Mediengerät K und einem Ein-Ausgabegerät A. Dabei ist das Mediengerät über eine kommunikative Verbindung DK mit der Datenschnittstelle 130 eines ersten Ladegeräts 100 verbunden. Die Datenschnittstelle ist über eine weitere kommunikative Verbindung D100 mit der Datenschnittstelle eines zweiten Ladegeräts 100 verbundenen. Die Medienschnittstelle des zweiten Ladegeräts 100 ist über eine kommunikative Verbindung DA mit dem Ein-Ausgabegerät verbunden. Auf diese Weise besteht eine kommunikative Verbindung zwischen dem Mediengerät und dem Audiogerät über eine Mehrzahl von, im dargestellten Beispiel zwei, Ladegeräten, sodass zwischen dem Mediengerät und dem Ein-Ausgabegerät, insbesondere bidirektional, Daten übertragen werden können.

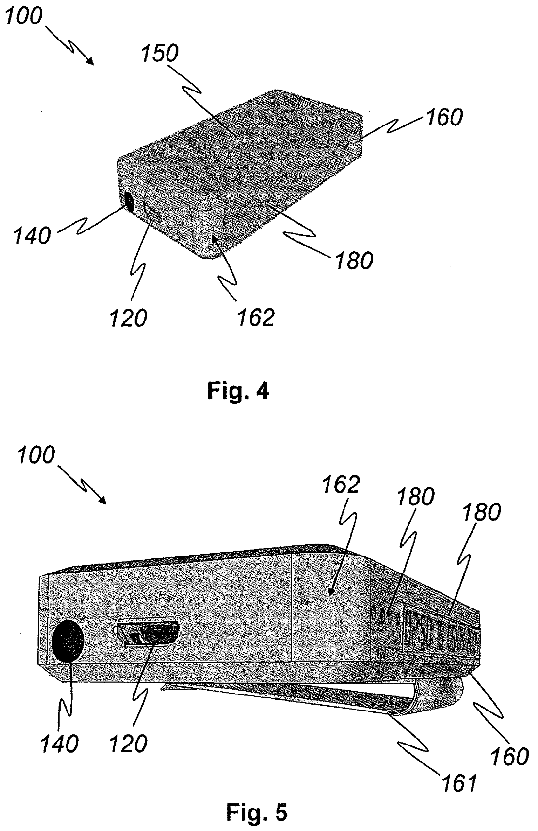

Figur 4 zeigt eine schematische Schrägansicht eines beispielhaften erfindungsgemäßen Ladegeräts 100. Das dargestellte Ladegerät 100 weist eine als eine Seitenfläche des Ladegeräts 100 vollständig einnehmende Haupttaste ausgebildete Eingabevorrichtung 150 auf. Das dargestellte Ladegerät 100 weist eine Medienschnittstelle 140 mit einer Kopfhörerbuchse und, beispielsweise daneben angeordnet, eine Ladeschnittstelle 120 mit einer Micro-USB-Buchse auf. Das dargestellte Ladegerät 100 weist eine Anzahl von, im dargestellten Beispiel vier, Leuchtdioden als Anzeigevorrichtung 180 auf. Das Gehäuse 160 des Ladegerätes umfasst eine Anzahl von abgerundeten Kanten 162.

Figur 5 zeigt eine schematische Schrägansicht eines weiteren beispielhaften erfindungsgemäßen Ladegeräts 100. Das dargestellte Ladegerät 100 unterscheidet sich von dem ein Figur 4 dargestellten durch eine weitere Anzeigeeinrichtung 180 in Form einer LCD-Anzeige, wodurch komplexere Informationen als mit vier Leuchtdioden, beispielsweise als Textnachricht, angezeigt werden können. Weiterhin ist eine Haltevorrichtung 161, zum Beispiel in Form einer Klammer, sichtbar, mit der das Ladegerät 100 an einem Kleidungsstück befestigt werden kann.

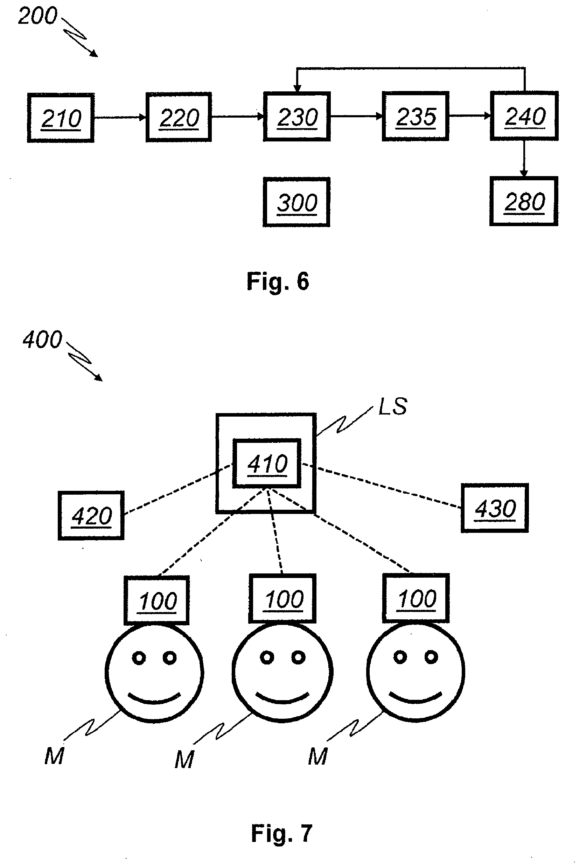

Figur 6 zeigt eine schematische Darstellung eines beispielhaften erfindungsgemäßen Verfahrens 200 zum Nutzen eines tragbaren Ladegeräts 100. Das dargestellte Verfahren 200 umfasst ein Einschalten 210 des Ladegeräts 100. Darauf folgt ein kommunikatives Verbinden 220 des Ladegerätes 100 mit zumindest einem Mediengerät K. Dann folgt ein Empfangen 230 von Daten von dem Mediengerät sowie ein Konvertieren 235 der empfangenen Daten in ein für die Wiedergabe durch ein mit dem Ladegerät 100 kommunikativ verbundenes Ein-Ausgabegerät A, beispielsweise einen Kopfhörer, geeignetes Datenformat. Darauf folgt ein Übertragen 240 der, beispielsweise zu analogen Audiosignalen, konvertierten Daten an das Ein-Ausgabegerät A. Das Empfangen 230, Konvertieren 235 und Übertragen 240 kann so lange fortgesetzt werden, bis ein Ausschalten 280 des Ladegerätes 100 erfolgt. Unabhängig von den vorgenannten Verfahrensschritten kann jederzeit ein Koppeln 300 eines Mediengerätes K mit dem Ladegerät 100 zum Aufladen des Mediengerätes K erfolgen.

Figur 7 zeigt schematisch ein beispielhaftes erfindungsgemäßes System 400 zur Koordinierung der Arbeit von einer Anzahl von Mitarbeitern M durch eine Mitarbeiterleitstelle LS. Jeder Mitarbeiter M führt ein erfindungsgemäßes Ladegerät 100 mit sich, das kommunikativ mit einem der Mitarbeiterleitstelle zugeordneten Server 410 verbunden werden kann. Das dargestellte System 400 umfasst eine Anzahl von Lokalisierungseinrichtungen 420, beispielsweise RFID-Scannern, zur Lokalisierung der Ladegeräte 100 und zumindest eine Meldeeinrichtung 430 zum Melden von Aufgaben an die Mitarbeiterleitstelle LS. Die Lokalisierungseinrichtungen 420 und die Meldeeinrichtung 430 können kommunikativ mit dem Server 410 verbunden sein. Die genannten kommunikativen Verbindungen sind durch gestrichelte Linien angedeutet.

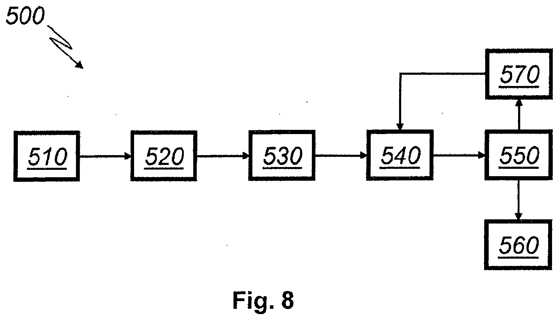

Figur 8 zeigt schematisch ein beispielhaftes erfindungsgemäßes Koordinierungsverfahren 500 zur Koordinierung der Arbeit von einer Anzahl von Mitarbeitern M durch eine Mitarbeiterleitstelle LS. Der erste gezeigte Verfahrensschritt ist ein Melden 510 einer Aufgabe und eines Ortes zur Bewältigung der Aufgabe an die Mitarbeiterleitstelle. Darauf folgt ein Ermitteln 520 der zur Bewältigung der Aufgabe geeigneten und verfügbaren Mitarbeiter M. Darauf folgt ein Lokalisieren 530 der ermittelten Mitarbeiter M mit Hilfe von Lokalisierungseinrichtungen 420 und von den Mitarbeitern M mitgeführten Ladegeräten 100. Aus den lokalisierten Mitarbeitern folgt ein Auswählen 540 des dem Ort zur Bewältigung der Aufgabe nächsten lokalisierten Mitarbeiters M und ein Benachrichtigen 550 des Mitarbeiters M über die Aufgabe und den Ort mit Hilfe des von dem Mitarbeiter mitgeführten Ladegeräts 100. Daraufhin kann der Mitarbeiter M mit dem Ladegerät 100 ein Bestätigen 560 oder ein Ablehnen 570 der Aufgabe durchführen, das an die Mitarbeiterleitstelle übermittelt wird. Im Falle eines Ablehnens 570 wird solange zyklisch ein Auswählen 540 und Benachrichtigen 550 des jeweils nächst nächsten lokalisierten Mitarbeiters M, bis von einem Mitarbeiter M ein Bestätigen 560 erfolgt.

Merkmale, die im Kontext eines Beispiels dargestellt sind, können erfindungsgemäß auch anders kombiniert werden.

### Bezugszeichenliste

- 100: Ladegerät
- 110: Energiespeicher
- 120: Ladeschnittstelle
- 130: Datenschnittstelle
- 140: Medienschnittstelle
- 150: Eingabevorrichtung
- 160: Gehäuse
- 161: Haltevorrichtung
- 162: Kante
- 170: Recheneinheit
- 180: Anzeigevorrichtung
- 200: Verfahren
- 210: Einschalten
- 220: Verbinden
- 230: Empfangen
- 235: Konvertieren
- 240: Übertragen
- 280: Ausschalten
- 300: Koppeln
- 400: System
- 410: Server
- 420: Lokalisierungseinrichtung
- 430: Meldeeinrichtung
- 500: Koordinierungsverfahren
- 510: Melden
- 520: Ermitteln
- 530: Lokalisieren
- 540: Auswählen
- 550: Benachrichtigen
- 560: Bestätigen
- 570: Ablehnen
- A: Ein-Ausgabegerät
- D100: kommunikative Verbindung zwischen Ladegerät und weiterem Ladegerät
- DA: kommunikative Verbindung zwischen Ein-Ausgabegerät und Ladegerät
- DK: kommunikative Verbindung zwischen Mediengerät und Ladegerät
- DKA: kommunikative Verbindung zwischen Mediengerät und Ein-Ausgabegerät
- EA: Verbindung zur Energieübertragung zwischen Ein-Ausgabegerät und Ladegerät
- EK: Verbindung zur Energieübertragung zwischen Mediengerät und Ladegerät
- K: Mediengerät
- LS: Mitarbeiterleitstelle
- M: Mitarbeiter

## Patentansprüche

1. Ladegerät (100) zur Erhöhung der Nutzungsdauer eines batteriebetriebenen Mediengerätes (K) mit zumindest einem Energiespeicher (110),
**gekennzeichnet durch**
a. zumindest eine Datenschnittstelle (130) zum Austausch von Daten mit dem Mediengerät (K) und/oder zumindest einem mit der Datenschnittstelle (130) kommunikativ verbundenen weiteren Mediengerät (K) und/oder weiteren Ladegerät (100);
b. zumindest eine Medienschnittstelle (140) zum Austausch von Daten mit einem mit der Medienschnittstelle (140) kommunikativ verbundenen Ein-Ausgabegerät (A);
c. zumindest eine Recheneinheit (170) zur Konvertierung von Daten unterschiedlicher Datenformate umfasst und
d. eine Masse des Ladegeräts (100) von unter 95 g und/oder eine maximale Ausdehnung des Ladegeräts (100) von unter 10 cm.

2. Ladegerät (100) gemäß Anspruch 1,
**gekennzeichnet durch**
zumindest einer Ladeschnittstelle (120) zum Aufladen eines mit der Ladeschnittstelle (120) zur Energieübertragung verbundenen Mediengerätes (K) und/oder Ein-Ausgabegerätes (A), wobei die Ladeschnittstelle (120) bevorzugt
a. zum Aufladen des Energiespeichers (110) aus einer externen Energiequelle (E) ausgelegt ist;
b. die Datenschnittstelle (130) und/oder die Medienschnittstelle (140) umfasst;
c. zumindest eine Induktionsspule zum kabellosen Aufladen des Mediengerätes (K), des Ein-Ausgabegerätes (A) und/oder des Energiespeichers (110), bevorzugt gemäß einem Industriestandard, umfasst und/oder
d. zumindest eine Ladebuchse, bevorzugt gemäß einem Industriestandard, zum kabelgebundenen Aufladen des Mediengerätes (K), des Ein-Ausgabegerätes (A) und/oder des Energiespeichers (110) umfasst.

3. Ladegerät (100) gemäß einem der Ansprüche 1 bis 2,
**dadurch gekennzeichnet, dass**
die Datenschnittstelle (130)
a. zum Austausch von Daten mit zumindest zwei mit der Datenschnittstelle (130) kommunikativ verbundenen Mediengeräten (K) ausgelegt ist und/oder
b. ein Kommunikationsmodul zum drahtlosen Senden und/oder Empfangen von Daten, bevorzugt gemäß einem Industriestandard, umfasst.

4. Ladegerät (100) gemäß einem der Ansprüche 1 bis 3,
**dadurch gekennzeichnet, dass**
a. der Energiespeicher (110) zumindest eine Batterie und/oder einen Akkumulator, bevorzugt zumindest einen Lithium-Ionen-Akkumulator, umfasst und bevorzugt austauschbar ist;
b. die Medienschnittstelle (140) zumindest eine Audiobuchse, bevorzugt gemäß einem Industriestandard, zum kabelgebundenen Anschluss eines Kopfhörers und/oder Mikrofons umfasst;
c. die Recheneinheit (170) zum Decodieren von, insbesondere komprimierten, Daten ausgelegt ist und/oder
d. die Recheneinheit (170) zumindest einen Analog-Digital-Wandler und/oder Digital-Analog-Wandler umfasst.

5. Ladegerät (100) gemäß einem der Ansprüche 1 bis 4,
**gekennzeichnet durch**
a. zumindest eine Anzeigevorrichtung (180), bevorzugt mit einer Anzahl von Leuchtdioden und/oder zumindest einem Bildschirm und/oder
b. zumindest eine Eingabevorrichtung (150), bevorzugt mit zumindest einer Haupttaste (151), die besonders bevorzugt eine Seitenfläche des Ladegeräts (100) im Wesentlichen vollständig einnimmt.

6. Ladegerät (100) gemäß einem der Ansprüche 1 bis 5,
**gekennzeichnet durch**
ein das Ladegerät (100) im Wesentlichen vollständig umschließendes Gehäuse (160), das bevorzugt
a. im Wesentlichen quaderförmig, besonders bevorzugt mit abgerundeten Kanten (162), ist und/oder
b. zumindest eine Haltevorrichtung (161) zur Befestigung des Ladegeräts (100) an einem Kleidungsstück umfasst, wobei die Haltevorrichtung (160) besonders bevorzugt zumindest eine Klammer, eine Nadel und/oder einen Magneten umfasst.

7. Ladegerät (100) gemäß einem der Ansprüche 1 bis 6,
**gekennzeichnet durch**
zumindest einen Lautsprecher, ein Mikrofon, einen einziehbaren Kopfhörer, einen RFID-Transponder, eine Positionsbestimmungseinrichtung, einen Vibrationsmotor, eine Vibrationsspule und/oder einen Bewegungssensor.

8. Verwendung eines tragbaren Ladegeräts (100), bevorzugt gemäß einem der Ansprüche 1 bis 7, zur Datenübertragung und/oder Datenkonvertierung zwischen zumindest einem Mediengerät (K) und einem Ein-Ausgabegerät (A).

9. Verfahren (200) zum Nutzen eines tragbaren Ladegeräts (100), bevorzugt gemäß einem der Ansprüche 1 bis 7, zur Erhöhung der Nutzungsdauer eines batteriebetriebenen Mediengerätes (K) mit zumindest den folgenden Schritten:
a. kommunikatives Verbinden (220) einer Datenschnittstelle (130) des Ladegeräts (100) mit einer Anzahl von Mediengeräten (K), wobei ein Erkennen des Ladegeräts (100) von den Mediengeräten (K) als Medien-Ein-Ausgabegerät erfolgt;
b. Empfangen (230) von Daten von zumindest einem der mit der Datenschnittstelle (130) verbundenen Mediengeräte (K);
c. Konvertieren (235) der empfangenen Daten in ein für die Wiedergabe durch ein mit einer Medienschnittstelle (140) des Ladegerätes (100) kommunikativ verbundenes Ein-Ausgabegerät (A) geeignetes Datenformat und
d. Übertragen (240) der konvertierten Daten an das Ein-Ausgabegerät (A).

10. Verfahren (200) gemäß Anspruch 8,
**gekennzeichnet durch** zumindest einen der folgenden Schritte:
a. Einschalten (210) und/oder Ausschalten (280) des Ladegeräts (100);
b. drahtloses, kommunikatives Verbinden (220) einer Datenschnittstelle (130) des Ladegeräts (100) mit einer Anzahl von Mediengeräten (K);
c. kommunikatives Verbinden (220) der Datenschnittstelle (130) mit einer Mehrzahl von Mediengeräten (K);
d. kommunikatives Verbinden der Datenschnittstelle (130) mit zumindest einem weiteren Ladegerät (100);
e. Weiterleiten der empfangenen Daten an das weitere Ladegerät (100);
f. automatisches Stummschalten (250) aller anderen Mediengeräte (K), wenn auf einem der mit der Datenschnittstelle (130) verbundenen Mediengeräte (K) ein Anruf eingeht;
g. Eingeben (260) von Steuerbefehlen für zumindest eines der mit der Datenschnittstelle (130) verbundenen Mediengeräte (K) über eine Eingabevorrichtung (150) des Ladegeräts (100), wobei ein Eingeben (260) unterschiedlicher Steuerbefehle bevorzugt über eine Haupttaste (151) des Ladegeräts (100) erfolgt, der je nach Situation und Art der Bedienung unterschiedliche Steuerbefehle auslöst, und/oder
h. Senden (270) von Steuerbefehlen über die Datenschnittstelle (130) an das zumindest eine damit verbundene Mediengerät (K)
i. Anzeigen (290) des Ladestatus eines Energiespeichers (110) des Ladegeräts (100) **durch** eine Anzeigevorrichtung (180) des Ladegeräts (100), bevorzugt **durch** eine Anzahl von Leuchtdioden;
j. Koppeln (300) eines Mediengerätes (K) und/oder Ein-Ausgabegerätes (A) an eine Ladeschnittstelle (120) des Ladegeräts (100) zum Aufladen des Kommunikationsgerätes (K) und/oder Ein-Ausgabegerätes (A) aus einem Energiespeicher (110) des Ladegeräts (100) und/oder zum Aufladen des Energiespeichers (110) aus dem Mediengerät (K) und/oder
k. Darstellen (310) von Daten eines mit der Datenschnittstelle (130), bevorzugt drahtlos, kommunikativ verbundenen Fitness-Überwachungsgerätes (F) **durch** die Anzeigevorrichtung (180).

11. Verfahren (200) gemäß Anspruch 10,
**dadurch gekennzeichnet, dass**
die Haupttaste (151) jeweils unterschiedliche Steuerbefehle auslöst, je nachdem, ob
a. an einem der mit der Datenschnittstelle (130) verbundenen Mediengeräte (K) ein Anruf eingeht oder nicht;
b. über das Ladegerät (100) ein Telefongespräch geführt wird oder nicht;
c. von einem der Mediengeräte (K) Mediendaten empfangen werden oder nicht;
d. die Haupttaste (151) einmal oder mehrmals schnell hintereinander betätigt wird und/oder
e. die Haupttaste (151) kurz oder lang betätigt wird.

12. Verfahren (200) gemäß einem der Ansprüche 10 bis 11,
**dadurch gekennzeichnet, dass**
die Steuerbefehle Befehle umfassen
a. zum Wiedergeben und Anhalten der Wiedergabe einer Mediendatei durch eines der mit der Datenschnittstelle (130) verbundenen Mediengeräte (K);
b. zum Annehmen und Beenden von Anrufen an einem der Mediengeräte (K);
c. zum Verändern einer Lautstärke des Audiosignals;
d. zum Zurückspringen an den Anfang einer von einem der Mediengeräte (K) wiedergegebenen Mediendatei und/oder zu einer zuvor wiedergegebenen Mediendatei;
e. zum Vorspringen zu einer in einer Wiedergabeliste eines der Mediengeräte (K) folgenden Mediendatei;
f. zum Vor- und/oder Zurückspulen innerhalb einer von einem der Mediengeräte (K) wiedergegebenen Mediendatei und/oder
g. zum Aktivieren und/oder Deaktivieren einer Sprachsteuerung und/oder eines sprachgesteuerten Assistenten eines der Mediengeräte (K).

13. System (400) zur Koordinierung der Arbeit von einer Anzahl von Mitarbeitern (M) durch eine Mitarbeiterleitstelle (LS),
**dadurch gekennzeichnet, dass**
a. jeder Mitarbeiter (M) zumindest ein Ladegerät (100) gemäß einem der Ansprüche 1 bis 7 mit sich führt und
b. die Mitarbeiterleitstelle (LS) ein als Server (410) ausgebildetes Mediengerät (K) umfasst.

14. System (400) gemäß Anspruch 13,
**gekennzeichnet durch**
a. eine Anzahl von Lokalisierungseinrichtungen (420) zur Lokalisierung der Ladegeräte (100), wobei die Lokalisierungseinrichtungen (420) bevorzugt eine Anzahl von RFID-Scannern und/oder Drahtlosnetzwerk-Zugangspunkten, besonders bevorzugt WLAN-Zugangspunkten und/oder Bluetooth-Zugangspunkten, umfassen und/oder
b. eine Anzahl von Meldeelnrichtungen (430) zum Melden einer Aufgabe und eines Ortes zur Bewältigung der Aufgabe an die Mitarbeiterleitstelle (LS).

15. Koordinierungsverfahren (500) zur Koordinierung der Arbeit von einer Anzahl von Mitarbeitern (M) durch eine Mitarbeiterleitstelle (LS) mit einem System (400) gemäß einem der Ansprüche 13 bis 14 mit zumindest folgenden Verfahrensschritten:
a. Ermitteln (520) der zur Bewältigung einer Aufgabe geeigneten und verfügbaren Mitarbeiter (M);
b. Lokalisieren (530) der ermittelten Mitarbeiter (M) anhand der von ihnen mitgeführten Ladegeräte (100) mit Hilfe der Lokalisierungseinrichtungen (420);
c. Auswählen (540) des dem Ort zur Bewältigung der Aufgabe nächsten lokalisierten Mitarbeiters (M) und
d. Benachrichtigen (550) des ausgewählten Mitarbeiters (M) über den Ort und die Aufgabe durch das von dem Mitarbeiter (M) getragenen Ladegerät (100) und.

16. Koordinierungsverfahren (500) gemäß Anspruch 15,
**gekennzeichnet durch**
zumindest einen der folgenden Verfahrensschritte:
a. Melden (510) der Aufgabe und/oder des Ortes zur Bewältigung der Aufgabe **durch** einen Melder an die Mitarbeiterleitstelle (LS);
b. Bestätigen (560) oder Ablehnen (570) der Übernahme der **durch** das Benachrichtigen (550) erhaltenen Aufgabe **durch** den benachrichtigten Mitarbeiter (M) mit Hilfe des von dem Mitarbeiter (M) getragenen Ladegeräts (100);
c. Aufbauen (580) einer Sprachverbindung zwischen einem ein Ladegerät (100) mitführenden tragenden Mitarbeiter (M) und der Mitarbeiterleitstelle (LS) und/oder einem Spracherkennungssystem über das Ladegerät (100), bevorzugt bei einer Betätigung einer Eingabevorrichtung (150) des Ladegeräts (100), und/oder
d. Protokollieren (590) der Aufenthaltszeiten eines ein Ladegerät (100) mitführenden Mitarbeiters (M) an seinem Arbeitsort.

17. Koordinierungsverfahren (500) gemäß Anspruch 16,
**dadurch gekennzeichnet, dass**
a. im Fall eines Bestätigens (560) eine Sprachverbindung zwischen dem bestätigenden Mitarbeiter (M) und dem Melder und/oder der Mitarbeiterleitstelle über das Ladegerät (100) aufgebaut wird und/oder
b. im Fall eines Ablehnens (570) ein Auswählen (540) und Benachrichtigen (550) des dem Ort zur Bewältigung der Aufgabe nächst nächsten lokalisierten Mitarbeiters (M) erfolgt.
